# EUROPÄISCHE PATENTSCHRIFT

(11) **EP 1 216 895 B1**
(45) Veröffentlichungstag und Bekanntmachung des Hinweises auf die Patenterteilung: **28.12.2005**
(21) Anmeldenummer: 01250445.2
(22) Anmeldetag: 19.12.2001
(51) Int. Cl.: B60R 21/20

(54) **Haltevorrichtung**
Mounting bracket
Support de montage

(30) Priorität: 22.12.2000 DE 10065795
(43) Veröffentlichungstag der Anmeldung: 26.06.2002
(73) Patentinhaber: TAKATA-PETRI (Ulm) GmbH, 89081 Ulm (DE)
(72) Erfinder: Aulbach, Alexander, 89073 Ulm (DE)
(74) Vertreter: Müller, Wolfram Hubertus

(56) Entgegenhaltungen:
- DE-A- 19 630 819
- US-A- 5 860 673
- US-A- 5 947 630

## Beschreibung

Die Erfindung betrifft eine Haltevorrichtung nach dem Oberbegriff des Anspruchs 1 sowie eine Verbindungsanordnung nach dem Oberbegriff des Anspruchs 18.

Rückhaltesysteme für Personen in Kraftfahrzeugen umfassen unter anderem Seitenairbags. Diese werden üblicherweise an unterschiedlichen Stellen entlang der Fahrzeuglängsseiten platziert. Dabei gibt es mehrere Einbaumöglichkeiten wie zum Beispiel die Integrierung in eine Fahrzeugtür oder in einen Fahrzeugsitz, speziell in die Lehne des Sitzes. Dabei kann der Airbag an einem Seitenholm der Lehne angebracht sein.

Aus der US 5 752 714 ist eine Möglichkeit der Befestigung eines Airbags an einer Fahrzeuglehne bekannt. Dort wird eine Trägerplatte an den runden stangenartigen Holm der Lehne angeschweißt, auf dieser ist das Airbag-Modul befestigt.

Die gattungsbildende US 5,947,630 beschreibt ein Gehäuse für ein Airbagmodul zur Befestigung an einem Fahrzeugsitz. Dafür ist an einer Stirnseite des Gehäuses eine Austanzung vorgesehen, wobei das nicht vollständig ausgestanzte Material derart umgebogen ist, dass es von dem Gehäuse wegweist. Das ausgestanzte Material hat dabei eine rechteckige Form und ist als Federstreifen ausgebildet. Der so entstandene Biegefalz erstreckt sich parallel zu einer hinteren Kante des Gehäuses und somit senkrecht zu der Richtung, in die der Federstreifen weist.

Aus der US 5,860,673 ist ein Airbaggehäuse bekannt, das an einem Abschnitt einen Haken aufweist. Der Haken ist zwar einstückig mit dem Gehäuseabschnitt ausgebildet, jedoch offensichtlich nicht aus der Fläche des Gehäuseabschnitts herausgebogen, da er gemäß nicht aus dem Material der Haltevorrichtung, sondern durch zusätzliches Material gefertigt ist.

Die bekannte Art der Befestigung der Trägerplatte erweist sich als nachteilig. Zur Montage dieser Trägerplatte muß aufwendige Schweißtechnik eingesetzt werden. Im Reparaturfall muß bei der Demontage ebenfalls geschweißt werden. Zusätzlich dazu ist es nicht möglich, Airbag-Modul und Trägerplatte in einem Arbeitsschritt zu montieren. Die Trägerplatte muß zuerst am Sitz befestigt werden, erst danach kann das Airbag-Modul aufmontiert werden.

Besitzt der Seitenholm des Sitzes nicht eine runde Stangenform und ist statt dessen als flaches Blech ausgebildet, erweist sich ein Anschweißen der Trägerplatte und Montieren des Airbagmoduls als noch schwieriger.

Ausgehend von diesem Stand der Technik besteht die Aufgabe der Erfindung darin, eine Haltevorrichtung und eine Verbindungsanordnung zu schaffen, mit der in einfacher und kostengünstiger Weise ein Bauteil, insbesondere ein Airbag oder ein Teil eines Airbags an einem Fahrzeugsitz befestigt werden kann. Zusätzlich soll ein einfaches Verfahren zur Montage eines Bauelements an ein Kfz-Bauteil zur Verfügung gestellt werden.

Die Aufgabe wird erfindungsgemäß durch eine Haltevorrichtung mit den Merkmalen des Anspruchs 1 und eine Verbindungsanordnung mit den Merkmalen des Anspruchs 18 gelöst. Bevorzugte und vorteilhafte Ausgestaltungen der Erfindung sind in den Unteransprüchen angegeben.

Danach sind bei einer Haltevorrichtung Mittel zur Befestigung an einem Kfz-Bauteil vorgesehen. Diese Mittel umfassen mindestens einen Haken und mindestens ein Element einer Bauteilverbindung. Die Haltevorrichtung wird dabei über die Befestigungsmittel mit dem Kfz-Bauteil verbunden.

Die Erfindung eröffnet die Möglichkeit, das zu befestigende Bauelement auf der Haltevorrichtung zu montieren, bevor diese in das Fahrzeug eingebaut wird. Die vormontierte Einheit von Bauelement und Haltevorrichtung kann so in einfacher Weise in einem Arbeitsschritt am Kfz-Bauteil befestigt werden. Im Reparaturfall kann diese Einheit leicht und ohne besondere Hilfsmittel demontiert werden.

Vorzugsweise ist der Haken in eine Aufnahmeöffnung des Kfz-Bauteils einhakbar. Eine Montage erfolgt somit durch Einhängen der Haltevorrichtung und eine einmalige Befestigung über das Element der Bauteilverbindung.

In einer bevorzugten Ausführung der Haltevorrichtung ist das Element der Bauteilverbindung eine in der Haltevorrichtung ausgebildete Öffnung zur Aufnahme bzw. Anbringung einer Schraube. Die Montage der Vorrichtung ebenso die Demontage gestaltet sich daher sehr einfach. Diese Öffnung kann aber auch als Aufnahme für einen Clip dienen, mit dem die Haltevorrichtung am Kfz-Bauteil angeclipst ist.

Weiter besteht die Möglichkeit, das Element der Bauteilverbindung als auf der Haltevorrichtung befestigtes Verbindungsteil auszubilden, beispielsweise ebenfalls als Clip oder als Einpress-Niet oder -Schraube, das oder die mit einer entsprechenden Struktur (Schraube etc.) des KFZ-Bauteils verbunden wird. Dabei ist das Verbindungsteil bevorzugt einstückig mit der Haltevorrichtung ausgebildet.

Das Element der Bauteilverbindung, über die die Haltevorrichtung mit dem Kfz-Bauteil verbunden ist, liegt vorzugsweise im Randbereich der Haltevorrichtung. Dadurch besteht nicht die Gefahr, daß das mit der Haltevorrichtung verbundene Bauelement über das Element ragt und somit deren Montage an das Kfz-Bauteil behindert.

Das mit der Haltevorrichtung zu verbindende Bauelement bzw. das von der Halteborrichtung gehaltene Bauelement wird vorzugsweise über eine Aufnahmeöffnung mit dieser verbunden. Dabei weist die Haltevorrichtung bevorzugt einen Aufnahmebereich auf, an dem das Bauteil einfach befestigt werden kann. Daraus ergibt sich die Möglichkeit, das Bauelement ebenfalls mit einer leicht lösbaren Schraubverbindung zu befestigen. Es liegen jedoch beliebige Arten einer Verbindung des Bauelements mit der Haltevorrichtung im Rahmen der Erfindung. Wesentlich ist allein, daß beide Teile vor der Anbringung an einem Kfz-Bauteil miteinander verbindbar sind.

Die Haltevorrichtung ist bevorzugt im wesentlichen länglich ausgebildet und dabei mit Abwinkelungen versehen. Dadurch ist sie der Form des Kfz-Bauteils anpassbar. Vorzugsweise wird der Aufnahmebereich des Bauelements derart geformt, daß Raum für die Aufnahme beispielsweise einer Schraubverbindung zwischen Bauelement und Haltevorrichtung besteht. Zusätzlich erhöht sich durch die Verformung die Steifigkeit der Vorrichtung.

Die Herstellung der Haltevorrichtung gestaltet sich kostengünstig, wenn der Haken vorzugsweise einstückig mit der Haltevorrichtung ausgebildet ist. Das bevorzugte Material für eine einfache und kostengünstige Herstellung ist Blech. Die Haltevorrichtung kann aber auch als Metall-Druckgussteil oder als Kunststoffspritzteil mit Einlegern ausgebildet sein. Guss- und Spritzteile sind sehr kostengünstig in der Herstellung. Ein weiterer Vorteil eines Kunststoffspritzteils liegt in seinem geringen Gewicht.

Die bisher beschriebenen Ausführungsformen eignen sich besonders für die Montage an einem Fahrzeugsitz, bevorzugt an einem Seitenholm der Lehne. Die Haltevorrichtung findet aber auch Anwendung bei der Montage an eine Fahrzeugtür, bevorzugt an eine Verstrebung der Fahrzeugtür. Das zu befestigende Bauelement ist jeweils vorzugsweise ein Seitenairbag.

Es liegt im Rahmen der Erfindung, daß nur Teile eines Airbags bzw. Seitenairbags an der Haltevorrichtung befestigt werden, etwa ein Gassackhaltering, ein Diffusor, ein Gassack und/oder ein Gasgenerator. Daraus ergibt sich die Möglichkeit, weitere Elemente eines Airbag-Rückhaltesystems in andere Sitzkomponenten, etwa den Seitenholm des Sitzes zu integrieren.

Die erfindungsgemäße Haltevorrichtung wird bevorzugt für die Befestigung eines Airbags an einem Kfz-Bauteil, insbesondere einem Fahrzeugsitz oder einer Fahrzeugtür, verwendet. Der Airbag ist schon vor dem Einbau auf der Haltevorrichtung montierbar. Diese Einheit (Haltevorrichtung und Airbag) kann mit wenigen einfachen Handgriffen und ohne besondere Hilfsmittel am Sitz oder an der Tür befestigt und auch gelöst werden.

Die Erfindung stellt des weiteren eine Verbindungsanordnung mit einer erfindungsgemäßen Haltevorrichtung zur Verfügung, die zusätzlich das Kfz-Bauteil mit umfaßt. Dabei weist das Kfz-Bauteil mindestens eine Aufnahmeöffnung auf, in die der Haken der Haltevorrichtung einhakbar ist.

In einer bevorzugten Ausgestaltung der Verbindungsanordnung wird die Haltevorrichtung mit nach unten weisendem Haken an dem KFZ-Bauteil befestigt. Hierdurch wird die Gefahr beseitigt, daß die Haltevorrichtung bei Erschütterungen und einem eventuellen Lösen der Bauteilverbindung nach unten abfallen kann. Auch ist die Montage erleichtert, da sich der Haken in der entsprechenden Aufnahmeöffnung des Kfz-Bauteils abstützt.

Ein Verfahren zur Montage ist dadurch gekennzeichnet, daß zunächst ein Bauelement an einer Haltevorrichtung mit mindestens einem Haken und mindestens einem Element einer Bauteilverbindung befestigt wird und dann die Haltevorrichtung an dem Kfz-Bauteil durch Einhängen des Hakens in eine Aufnahmeöffnung des KFZ-Bauteils und das Element der Bauteilverbindung befestigt wird. Es wird auf diese Weise eine einfache, schnelle und reversible Montage bereitgestellt.

Die Erfindung wird nachfolgend unter Bezugnahme auf die Figuren der Zeichnung näher erläutert. Es zeigen:
- Fig.1: ein erstes Ausführungsbeispiel einer Haltevorrichtung,
- Fig.2: ein zweites Ausführungsbeispiel einer Haltevorrichtung,
- Fig.3: ein drittes Ausführungsbeispiel einer Haltevorrichtung mit einem montierten Gassackhaltering mit Diffusor,
- Fig.4: ein viertes Ausführungsbeispiel einer Haltevorrichtung mit einer montierten Gassackbefestigung mit Diffusor,
- Fig.5: einen Seitenholm einer Lehne eines Fahrzeugsitzes und eine daran zu befestigende Haltevorrichtung,
- Fig.6: ein fünftes Ausführungsbeispiel einer Haltevorrichtung,
- Fig.7a: ein sechstes Ausführungsbeispiel einer Haltevorrichtung in der Ansicht von unten,
- Fig.7b: das Ausführungsbeispiel der Fig. 7a in der Seitenansicht,
- Fig.7c: das Ausführungsbeispiel der Fig. 7a mit Abdeckkappe in der Seitenansicht,
- Fig.7d: das Ausführungsbeipiel der Fig. 7a in perspektivischer Ansicht von oben;
- Fig.7e: das Ausführungsbeipiel der Fig. 7a mit Abdeckkappe in perspektivischer Ansicht von oben und
- Fig.8: eine Anordnung von Seitenholm und Haltevorrichtung entsprechend Fig. 5, wobei die Haltevorrichtung einen nach unten weisenden Haken ausbildet.

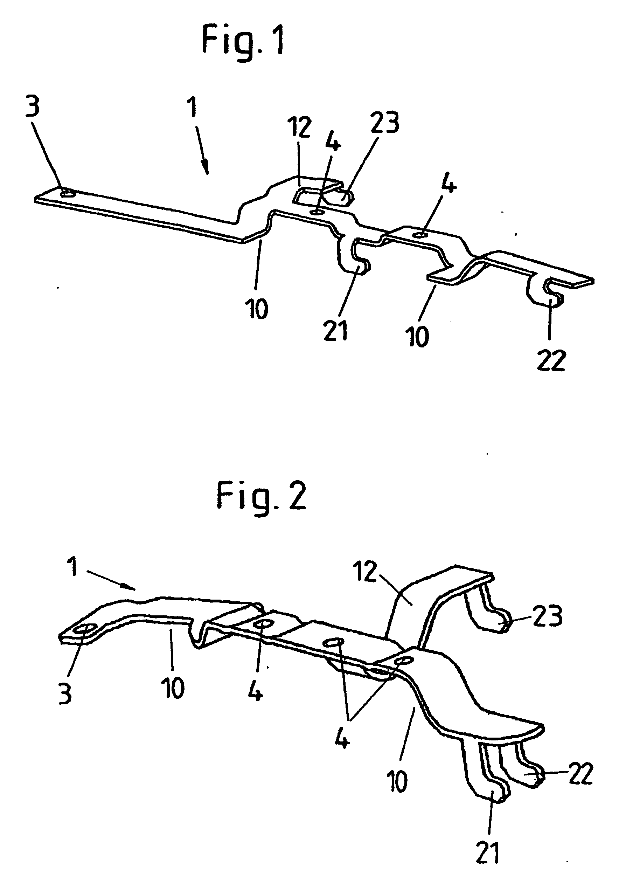

Die Figur 1 zeigt eine erste Ausführungsform einer erfindungsgemäßen Haltevorrichtung 1. Die Haltevorrichtung 1 ist als längliches Blech ausgebildet und weist neben mehreren abgewinkelten Bereichen drei Haken 21, 22, 23 zum Einhängen in nicht dargestellte Langlöcher eines Kfz-Bauteils auf. Ein Haken 23 ist dabei an einem Seitenarm 12 der Haltevorrichtung 1 ausgebildet.

Eine im Randbereich der Haltevorrichtung ausgebildete Öffnung 3 dient in Verbindung mit den Haken 21, 22, 23 zur Befestigung der Vorrichtung 1 an dem nicht dargestellten Kfz-Bauteil mittels einer Schraubverbindung oder einer anderen Befestigungsart.

Weiter sind Montageöffnungen 4 vorgesehen, mittels derer ein Airbag oder ein anderes Bauelement beispielsweise über eine Schraubverbindung an der Haltevorrichtung 1 befestigt werden kann. Es können auch andere Befestigungsarten verwendet werden.

In der Figur 2 ist eine dem Ausführungsbeispiel der Figur 1 ähnliche Haltevorrichtung 1 dargestellt. Unterschiedlich ist hier die Anordnung der Haken 21, 22, 23. Zwei Haken 21, 22 sind nebeneinander angeordnet. Der Haken 23 befindet sich ebenfalls an einem kleinen Seitenarm 12 des Bleches, wobei der Seitenarm 12 gewölbt ist und dadurch eine Aufnahme bereitstellt, in der beispielsweise ein Gasgenerator gelagert werden kann.

Zur Befestigung eines Bauelementes sind in Figur 2 Montageöffnungen 4 vorgesehen.

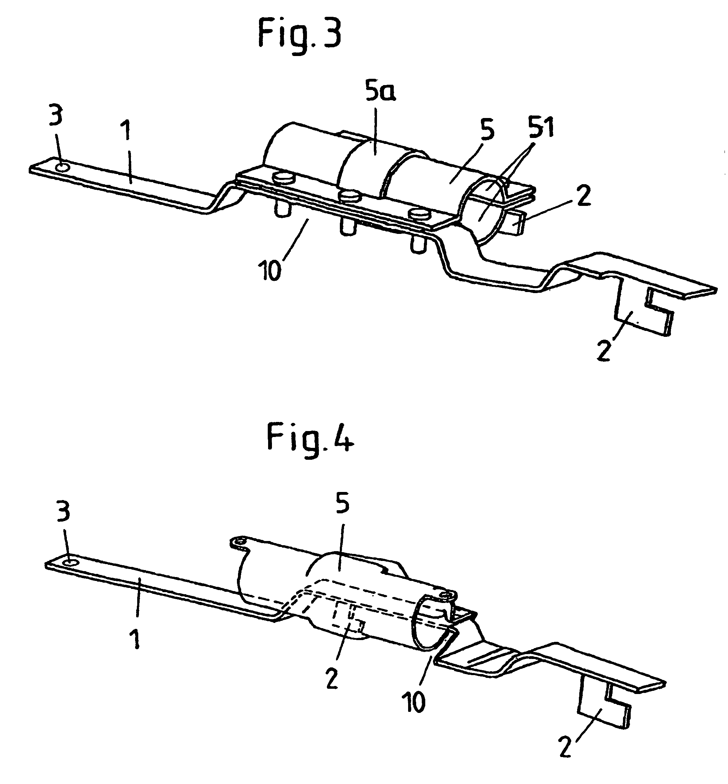

In Fig. 3 ist eine weitere Haltevorrichtung 1 mit zwei Haken 2 dargestellt. Die Haltevorrichtung 1 weist einen Aufnahmebereich 10, in dem ein Bauteil 5 über Schraub- oder Nietverbindungen befestigt ist. Dieser Aufnahmebereich 10 ist abgewinkelt ausgebildet.

Das Bauteil ist ein Gassackhaltering 5 mit Diffusor, das aus zwei Halbschalen 51 besteht. Der Gassackhaltering 5 dient der Halterung des Gassacks, der Aufnahme eines Gasgenerators und der Leitung des Gasstromes in eine bevorzugte Ausströmrichtung. Dabei sind in einem mittleren Bereich 5a Ausströmöffnungen (nicht dargestellt) für das ausströmende Gas ausgebildet.

In Figur 4 ist eine weitere Ausgestaltung eines Gassackhalterings 5 (auch als Sleeve bezeichnet) dargestellt. Dabei wird der Gassack zwischen Sleeve 5 und Halteblech 1 gehalten. Zusätzlich trägt das Sleeve 5 den Gasgenerator und sorgt für ein Umleiten des Gasstromes in eine bevorzugte Ausströmrichtung. Dabei sind in dem Sleeve Schlitze (nicht dargestellt) zum geeignetes Ausströmen des Gases im Auslösefall vorgesehen.

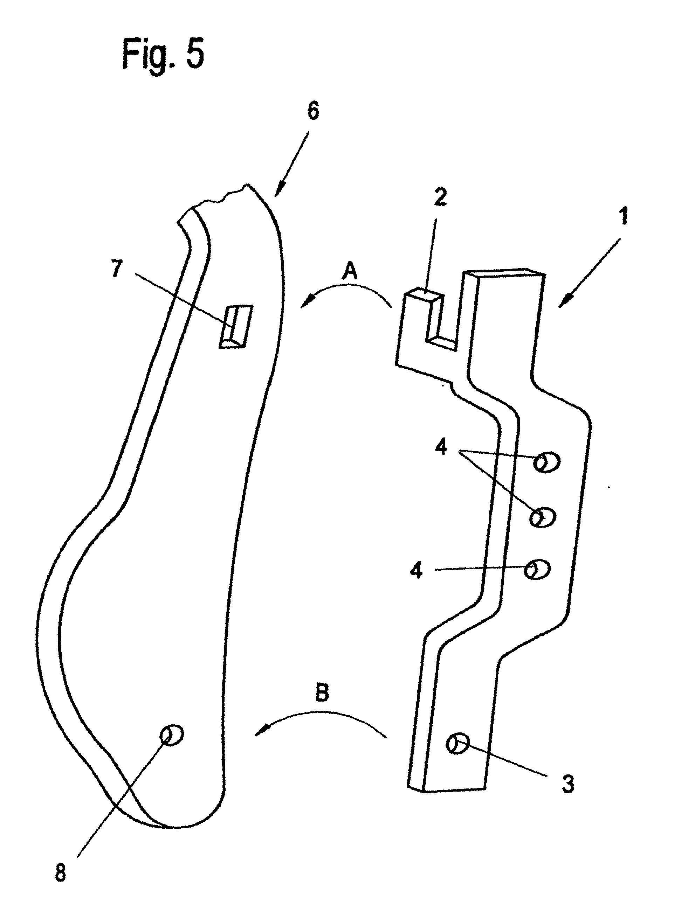

Die Figur 5 zeigt neben einer Haltevorrichtung 1 einen Seitenholm 6 der Lehne eines Fahrzeugsitzes. Im Seitenholm 6 befindet eine Öffnung 8 sowie eine Aufnahmeöffnung 7. Diese korrespondieren entsprechend den Pfeilen A, B mit der Öffnung 3 und dem Haken 2 der Haltevorrichtung 1. Die Haltevorrichtung 1 enthält wiederum zusätzliche Montageöffnungen 4 zur Befestigung eines nicht dargestellten Bauelementes 5.

Die Haltevorrichtung kann nach der Montage eines Seitenairbags am Seitenholm oder an der Verstrebung der Fahrzeugtür befestigt werden. Dazu wird der Haken 2 in die dafür vorgesehene Aufnahmeöffnung 7 des Seitenholms 6 eingesetzt. Danach wird die Haltevorrichtung 1 mittels einer Schraubverbindung oder einer anderen Befestigungsart über die korrespondierenden Öffnungen 3, 8 an dem Seitenholm 6 arretiert.

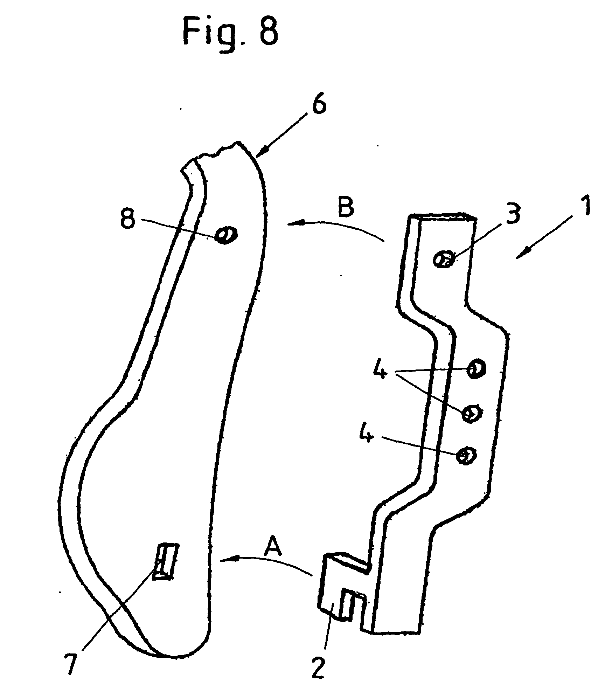

Die Figur 8 zeigt eine ähnliche Ausführungsform wie die Figur 5, wobei die Haltevorrichtung 1 jedoch derart ausgerichtet ist, dass der Haken 2 der Haltevorrichtung 1 im montierten Zustand gegenüber dem Ausführungsbeispiel der Figur 5 in umgekehrte Richtung und dementsprechend nach unten zeigt. Der nach unten weisende Haken 2 wird wiederum entsprechend dem Pfeil A in die dafür vorgesehene Aufnahmeöffnung 7 eingesetzt. Danach wird die Haltevorrichtung 1 wiederum mittels einer Schraubverbindung oder einer anderen Befestigungsart über die korrespondierenden Öffnungen 3, 8 an dem Seitenholm 6 arretiert.

Die Befestigung der Haltevorrichtung 1 an dem Seitenholm 6 mit nach unten weisendem Haken 2 weist den Vorteil auf, dass nicht die Gefahr besteht, daß die Haltevorrichtung 1 bei Erschütterungen und einem eventuellen Lösen der Bauteilverbindung der Öffnungen 3, 8 nach unter abfallen kann. Auch ist die Montage erleichtert, da sich der Haken 2 in der entsprechenden Aufnahmeöffnung 7 des Seitenholms 6 abstützen kann.

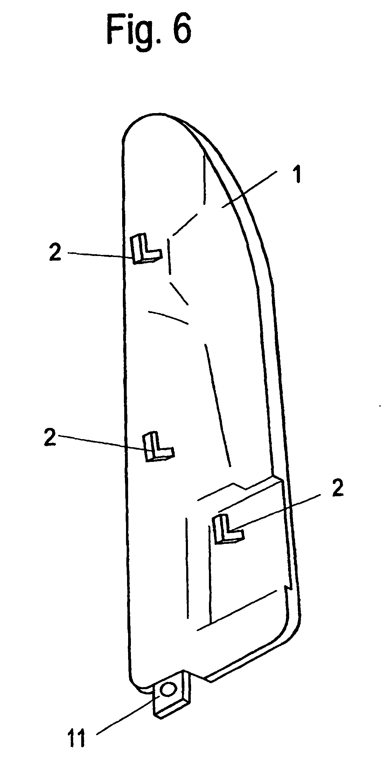

Es wird darauf hingewiesen, daß die Haltevorrichtung eine beliebige Form aufweisen, insbesondere auch als flächiges Blechelement 1 ausgebildet sein kann. Eine entsprechend ausgebildete Haltevorrichtung ist in Fig. 6 dargestellt. In dem Blechelement 1 sind drei Haken 2 angeordnet. Eine Öffnung 3 für die Verschraubung mit einem Seitenholm 6 ist an einem Fortsatz 11 des Blechelements 1 ausgebildet.

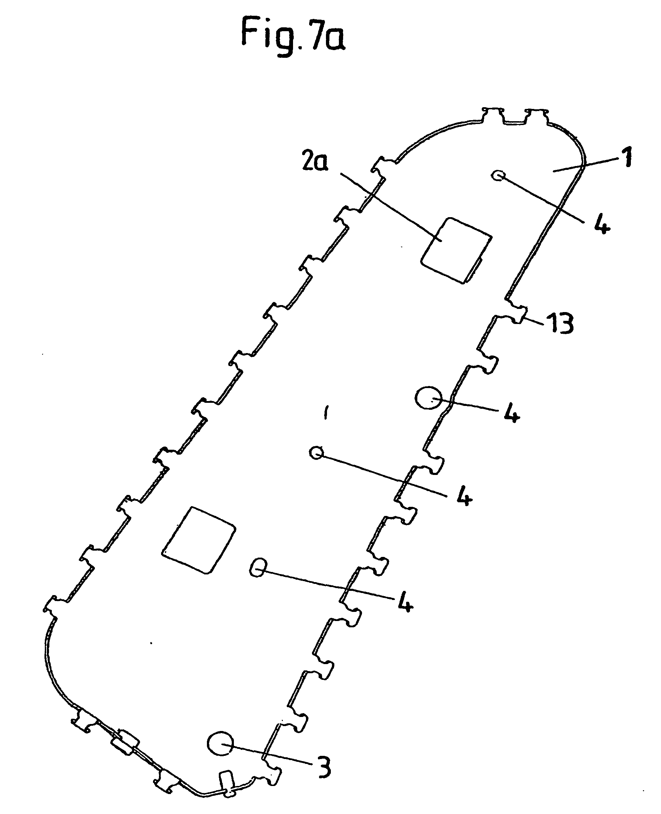

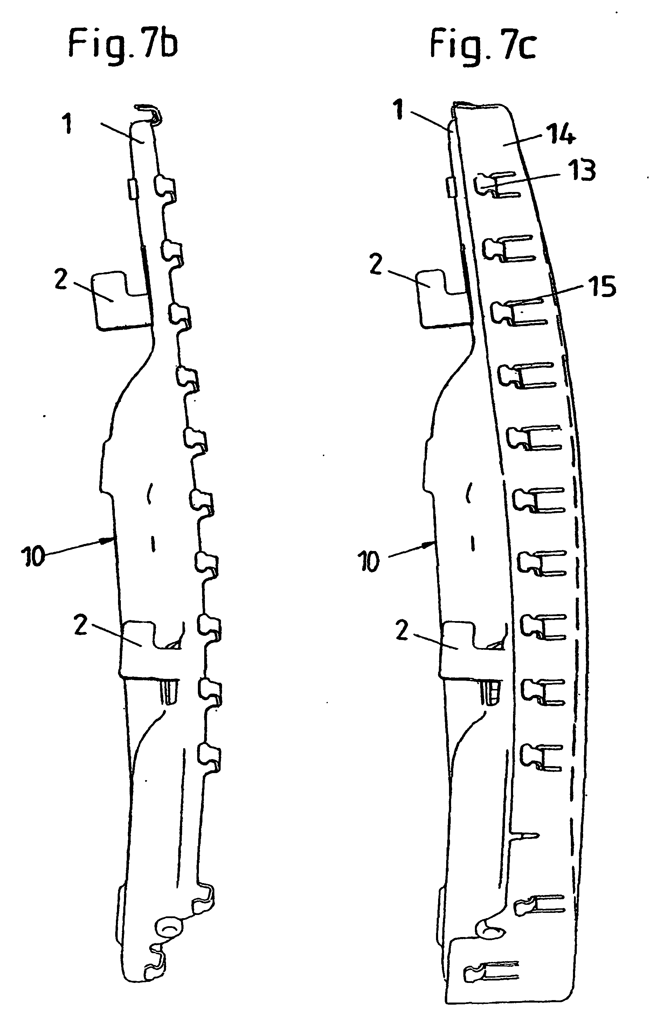

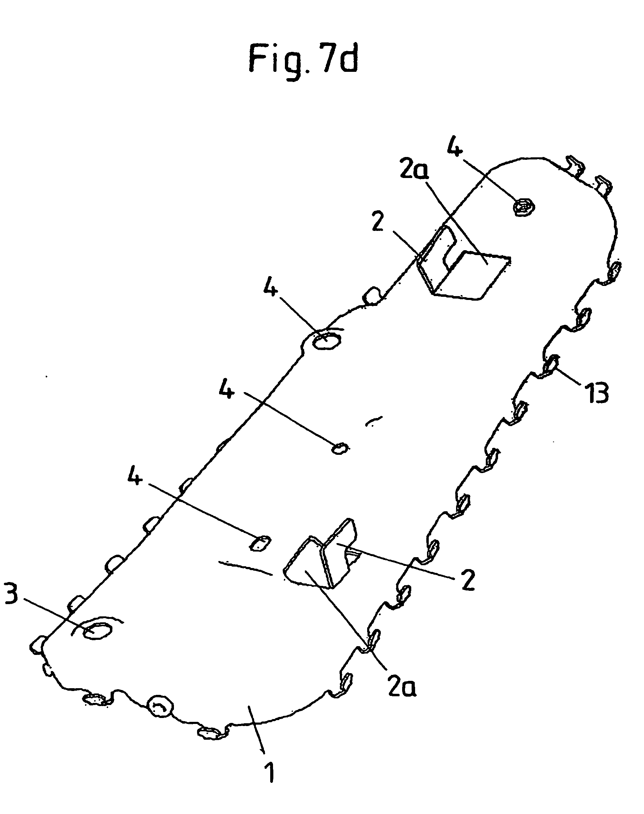

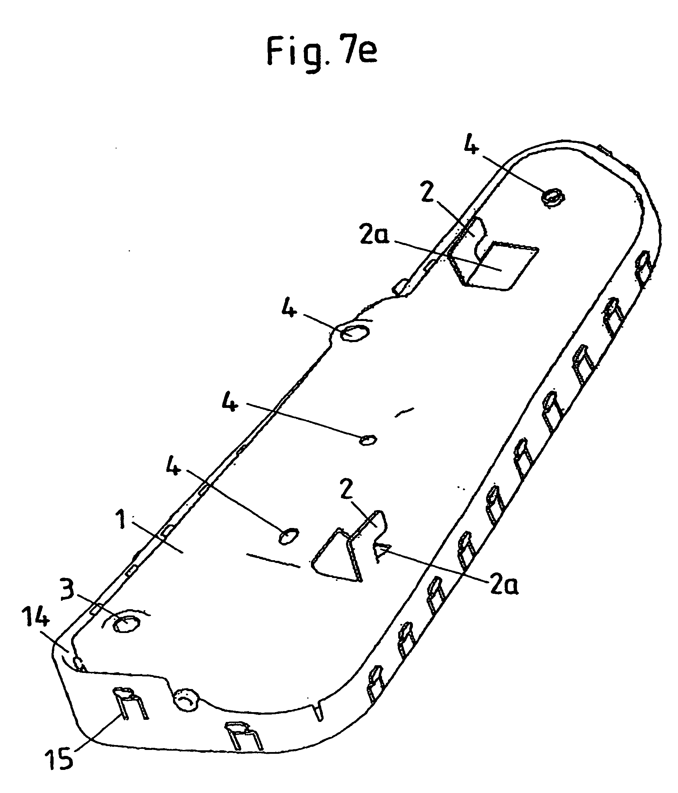

In den Figuren 7a bis 7e ist eine weitere Haltevorrichtung, die als flächiges Element 1 ausgebildet ist, dargestellt. Sie weist im Randbereich eine Öffnung 3 zur Befestigung an einem Kfz-Bauteil sowie zwei Haken 2 auf, die jeweils am Rand einer im wesentlichen quadratischen Stanzöffnung 2a angeordnet sind. Mehrere Montageöffnungen 4 befinden sich in einem in Richtung Kfz-Bauteil abgewinkelten Aufnahmebereich 10, der der Befestigung eines Airbagmoduls oder Teil eines Airbagmoduls an der Haltevorrichtung dient.

Zusätzlich weist die Vorrichtung 1 umlaufende Hakelemente 13 auf. Diese sind in Richtung Kfz-Bauteil abgewinkelt und dienen der Befestigung einer Abdeckkappe 14 an der Haltevorrichtung. Diese entspricht in ihrer Form der Vorrichtung 1 und weist in einem umlaufend abgewinkelten Randbereich Öffnungen 15 auf. Die Öffnungen 15 sind im dargestellten Ausführungsbeispiel jeweils aus U-förmig angeordneten Schlitzen gebildet. Sie korrespondieren mit den Hakelementen 13. Die Abdeckkappe 14 sitzt dabei auf der dem Kfz-Bauteil abgewandten Seite der Vorrichtung 1.

Nach Befestigen eines Airbagmoduls oder Teil eines Airbagmoduls an dem Aufnahmeabschnitt 10, das bereits vor der Montage der Haltevorrichtung erfolgen kann, wird die Haltevorrichtung über die Haken 2 und die Öffnung 3 mit einem KFZ-Bauteil verbunden. Anschließend wird zur Abdeckung die Abdeckkappe 14 angebracht.

Die Erfindung beschränkt sich nicht auf die vorstehend dargestellten Ausführungsbeispiele. Wesentlich für die Erfindung ist allein, daß eine Haltevorrichtung für mindestens ein mit der Haltevorrichtung verbundenes Bauelement Mittel zur Befestigung an einem Kfz-Bauteil aufweist, die mindestens einen Haken und mindestens ein Element einer Bauteilverbindung umfassen.

### Bezugszeichenliste

- 1: Haltevorrichtung
- 2: Haken
- 21: Haken
- 22: Haken
- 23: Haken
- 2a: Stanzöffnung
- 3: Öffnung
- 4: Montageöffnung
- 5: Bauelement
- 5a: Gassack-Halteblech
- 51: Halbschalen
- 6: Seitenholm
- 8: Aufnahmeöffnung
- 10: Aufnahmebereich
- 11: Fortsatz
- 12: Seitenarm
- 13: Hakelemente
- 14: Abdeckkappe
- 15: geschlitzte Öffnungen
- A,B: Richtungspfeile

## Patentansprüche

1. Haltevorrichtung (1) für mindestens ein mit der Haltevorrichtung (1) verbundenes Bauelement (5) oder Teil eines Bauelementes (5), insbesondere ein Airbagmodul oder Teil eines Airbagmoduls, wobei die Haltevorrichtung (1) als flächiges Element ausgebildet ist und Mittel zur Befestigung an einem Kfz-Bauteil aufweist, die mindestens einen Haken (2) und mindestens ein Element (3) einer Bauteilverbindung umfassen, wobei der Haken (2) einstückig mit der Haltevorrichtung (1) ausgebildet ist und um einen Biegefalz aus der Fläche der Haltevorrichtung(1) herausgebogen ist
**dadurch gekennzeichnet,**
**dass** sich der Biegefalz in der Richtung erstreckt, in die der Haken weist.

2. Haltevorrichtung nach Anspruch 1, **dadurch gekennzeichnet, daß** der Haken (2) der Haltevorrichtung derart ausgebildet ist, daß er in eine Aufnahmeöffnung (7) des Kfz-Bauteils einhakbar ist.

3. Haltevorrichtung nach Anspruch 2, **dadurch gekennzeichnet, daß** das Element (3) der Bauteilverbindung als eine Öffnung zur Aufnahme eines Verbindungsteils, insbesondere einer Schraube oder eines Clip, oder als ein auf der Vorrichtung befestigtes Verbindungsteil, insbesondere ein Einpressniet oder ein Clip, ausgebildet ist.

4. Haltevorrichtung nach mindestens einem der vorhergehenden Ansprüche, **dadurch gekennzeichnet, daß** sich das Element (3) der Bauteilverbindung im Randbereich der Haltevorrichtung befindet.

5. Haltevorrichtung nach mindestens einem der vorhergehenden Ansprüche, **dadurch gekennzeichnet, daß** die Haltevorrichtung einen Aufnahmebereich (10) zur Aufnahme des Bauelements (5) oder Teils eines Bauelements aufweist.

6. Haltevorrichtung nach Anspruch 5, **dadurch gekennzeichnet, daß** der Aufnahmebereich (10) mindestens eine Öffnung (4) aufweist, über die das aufzunehmende Bauelement (5) oder Teil des Bauelementes an der Haltevorrichtung (1) befestigbar ist.

7. Haltevorrichtung nach mindestens einem der vorhergehenden Ansprüche, **dadurch gekennzeichnet, daß** die Haltevorrichtung im wesentlichen länglich ausgebildet ist.

8. Haltevorrichtung nach mindestens einem der vorhergehenden Ansprüche, **dadurch gekennzeichnet, daß** die Haltevorrichtung Abwinkelungen aufweist.

9. Haltevorrichtung nach Anspruch 5 und 8, **dadurch gekennzeichnet, daß** der Aufnahmebereich abgewinkelt ausgebildet ist.

10. Haltevorrichtung nach mindestens einem der vorhergehenden Ansprüche, **dadurch gekennzeichnet, daß** der Haken (2) einstückig mit der Haltevorrichtung (1) ausgebildet ist.

11. Haltevorrichtung nach mindestens einem der vorhergehenden Ansprüche, **dadurch gekennzeichnet, daß** die Haltevorrichtung (1) aus Blech besteht oder als Metall-Druckgussteil oder als Kunststoffspritzteil mit Einlegern ausgebildet ist.

12. Haltevorrichtung nach mindestens einem der vorhergehenden Ansprüche, **dadurch gekennzeichnet, daß** das Kfz-Bauteil (6) ein Fahrzeugsitz ist.

13. Haltevorrichtung nach Anspruch 12, **dadurch gekennzeichnet, daß** die Haltevorrichtung an einem Seitenholm (6) der Lehne des Fahrzeugsitzes befestigt ist.

14. Haltevorrichtung nach mindestens einem der vorhergehenden Ansprüche, **dadurch gekennzeichnet, daß** das Kfz-Bauteil (6) eine Fahrzeugtür ist.

15. Haltevorrichtung nach Anspruch 14, **dadurch gekennzeichnet, daß** die Haltevorrichtung an einer Verstrebung der Fahrzeugtür befestigt ist.

16. Haltevorrichtung nach mindestens einem der vorhergehenden Ansprüche mit einem Airbagmodul als Bauelement, **dadurch gekennzeichnet, daß** das Airbagmodul einen Seitenairbag aufweist.

17. Haltevorrichtung nach mindestens einem der vorhergehenden Ansprüche, **dadurch gekennzeichnet, daß** die Teile eines Bauelements (5) ein Gassack-Halteelement und/oder ein Gasgenerator-Halteelement und/oder eine Abdeckkappe des Airbags sind.

18. Verbindungsanordnung mit einer Haltevorrichtung (1), gemäss einem der Ansprüche 1-17, die mindestens ein mit der Haltevorrichtung (1) verbundenes Bauelement (5) oder Teil eines Bauelementes (5), insbesondere ein Airbagmodul oder Teil eines Airbagmoduls, aufweist, und mit einem Kfz-Bauteil (6), insbesondere einem Seitenholm (6) der Lehne eines Fahrzeugsitzes oder einer Verstrebung einer Fahrzeugtür,
wobei das Kfz-Bauteil (6) mindestens eine Aufnahmeöffnung (7) aufweist, und
wobei die Haltevorrichtung (1) mit dem Haken (2) in die Aufnahmeöffnung (7) einhakbar und Ober das Element (3) der Bauteilverbindung mit dem Kfz-Bauteil (6) verbindbar ist.

19. Verbindungsanordnung nach Anspruch 18, **dadurch gekennzeichnet, daß** die Aufnahmeöffnung ein Langloch (7) ist.

20. Verbindungsanordnung nach Anspruch 18 oder 19, **dadurch gekennzeichnet, daß** der Haken (2) der an dem KFZ-Bauteil (6) befestigten Haltevorrichtung (1) nach unten weist.

## Claims

1. Retaining device (1) for at least one structural element (5) or part of a structural element (5), in particular an air-bag module or part of an air-bag module, which is connected to the retaining device (1), the retaining device (1) being designed as a planar element and having means for fastening to a motor-vehicle component, the said means comprising at least one hook (2) and at least one element (3) of a component connection, the hook (2) being of integral design with the retaining device (1) and being bent outwards out of the surface of the retaining device (1) about a bending fold, **characterized in that** the bending fold extends in the direction in which the hook points.

2. Retaining device according to Claim 1, **characterized in that** the hook (2) of the retaining device is designed in such a manner that it can be hooked into a receiving opening (7) of the motor-vehicle component.

3. Retaining device according to Claim 2, **characterized in that** the element (3) of the component connection is designed as an opening for receiving a connecting part, in particular a screw or a clip, or as a connecting part which is fastened on the device, in particular a press-in rivet or a clip.

4. Retaining device according to at least one of the preceding claims, **characterized in that** the element (3) of the component connection is situated in the edge region of the retaining device.

5. Retaining device according to at least one of the preceding claims, **characterized in that** the retaining device has a receiving region (10) for receiving the structural element (5) or part of a structural element.

6. Retaining device according to Claim 5, **characterized in that** the receiving region (10) has at least one opening (4) via which the structural element (5) or part of the structural element which is to be received can be fastened to the retaining device (1).

7. Retaining device according to at least one of the preceding claims, **characterized in that** the retaining device is essentially of elongated design.

8. Retaining device according to at least one of the preceding claims, **characterized in that** the retaining device has angled portions.

9. Retaining device according to Claims 5 and 8, **characterized in that** the receiving region is of angled design.

10. Retaining device according to at least one of the preceding claims, **characterized in that** the hook (2) is of integral design with the retaining device (1).

11. Retaining device according to at least one of the preceding claims, **characterized in that** the retaining device (1) consists of sheet metal or is formed as a metal die casting or as a plastic injection moulding with inserts.

12. Retaining device according to at least one of the preceding claims, **characterized in that** the motor-vehicle component (6) is a vehicle seat.

13. Retaining device according to Claim 12, **characterized in that** the retaining device is fastened to a side strut (6) of the backrest of the vehicle seat.

14. Retaining device according to at least one of the preceding claims, **characterized in that** the motor-vehicle component (6) is a vehicle door.

15. Retaining device according to Claim 14, **characterized in that** the retaining device is fastened to a strutting arrangement of the vehicle door.

16. Retaining device according to at least one of the preceding claims, having an air-bag module as the structural element, **characterized in that** the air-bag module has a side air bag.

17. Retaining device according to at least one of the preceding claims, **characterized in that** the parts of a structural element (5) are a gas-sack-retaining element and/or a gas-generator retaining element and/or a covering cap of the air bag.

18. Connecting arrangement having a retaining device (1) according to one of Claims 1 - 17, which has at least one structural element (5) or part of a structural element (5), in particular an air-bag module or part of an air-bag module, which is connected to the retaining device (1), and having a motor-vehicle component (6), in particular a side strut (6) of the backrest of a vehicle seat or a strutting arrangement of a vehicle door, the motor-vehicle component (6) having at least one receiving opening (7), and it being possible for the retaining device (1) to be hooked into the receiving opening (7) by means of the hook (2) and to be connected to the motor-vehicle component (6) via the element (3) of the component connection.

19. Connecting arrangement according to Claim 18, **characterized in that** the receiving opening is an elongated hole (7).

20. Connecting arrangement according to Claim 18 or 19, **characterized in that** the hook (2) of the retaining device (1) fastened to the motor-vehicle component (6) points downwards.

## Revendications

1. Dispositif de retenue (1) pour au moins un composant (5) relié au dispositif de retenue (1) ou une partie d'un composant (5), notamment un module d'airbag ou une partie d'un module d'airbag, le dispositif de retenue (1) étant conçu comme un élément plan et comprenant des moyens de fixation à un composant de véhicule automobile, qui comportent au moins un crochet (2) et au moins un élément (3) d'une liaison de composant, le crochet (2) étant conçu en un seul tenant avec le dispositif de retenue (1) et étant fléchi autour d'une pliure flexionnelle hors de la surface du dispositif de retenue (1)
**caractérisé en ce que**
la pliure flexionnelle s'étend dans la direction dans laquelle est orienté le crochet.

2. Dispositif de retenue selon la revendication 1, **caractérisé en ce que** le crochet (2) du dispositif de retenue est conçu de telle sorte qu'il peut être accroché dans un orifice de réception (7) du composant de véhicule automobile.

3. Dispositif de retenue selon la revendication 2, **caractérisé en ce que** l'élément (3) de la liaison de composant est conçu comme un orifice de réception d'une partie d'assemblage, notamment d'une vis ou d'une agrafe, ou comme une partie d'assemblage fixée sur le dispositif, notamment un rivet à encastrer ou une agrafe.

4. Dispositif de retenue selon au moins l'une quelconque des revendications précédentes, **caractérisé en ce que** l'élément (3) de la liaison de composant se situe dans la zone latérale du dispositif de retenue.

5. Dispositif de retenue selon au moins l'une quelconque des revendications précédentes, **caractérisé en ce que** le dispositif de retenue comprend une zone de réception (10) pour la réception du composant (5) ou de la partie d'un composant.

6. Dispositif de retenue selon la revendication 5, **caractérisé** eh ce que la zone de réception (10) comprend au moins un orifice (4), par l'intermédiaire duquel le composant destiné à être reçu ou une partie du composant peut être fixé(e) au dispositif de retenue (1).

7. Dispositif de retenue selon au moins l'une quelconque des revendications précédentes, **caractérisé en ce que** le dispositif de retenue est conçu de façon sensiblement oblongue.

8. Dispositif de retenue selon au moins l'une quelconque des revendications précédentes, **caractérisé en ce que** le dispositif de retenue comprend des coudages.

9. Dispositif de retenue selon les revendications 5 et 8, **caractérisé en ce que** la zone de réception est conçue de façon coudée.

10. Dispositif de retenue selon au moins l'une quelconque des revendications précédentes, **caractérisé en ce que** le crochet (2) est conçu en un seul tenant avec le dispositif de retenue (1).

11. Dispositif de retenue selon au moins l'une quelconque des revendications précédentes, **caractérisé en ce que** le dispositif de retenue (1) est constitué de tôle ou d'une pièce métallique coulée sous pression ou d'une pièce en matière plastique moulée par injection dotée d'ajouts.

12. Dispositif de retenue selon au moins l'une quelconque des revendications précédentes, **caractérisé en ce que** le composant de véhicule automobile (6) est un siège de véhicule.

13. Dispositif de retenue selon la revendication 12, **caractérisé en ce que** le dispositif de retenue est fixé à un longeron latéral (6) du dossier du siège du véhicule.

14. Dispositif de retenue selon au moins l'une quelconque des revendications précédentes, **caractérisé en ce que** le composant de véhicule automobile (6) est une portière de véhicule.

15. Dispositif de retenue selon la revendication 14, **caractérisé en ce que** le dispositif de retenue est fixé à une entretoise de la portière du véhicule.

16. Dispositif de retenue selon au moins l'une quelconque des revendications précédentes, doté d'un module d'airbag en tant que le composant, **caractérisé en ce que** le module d'airbag comprend un airbag latéral.

17. Dispositif de retenue selon au moins l'une quelconque des revendications précédentes, **caractérisé en ce que** les parties d'un composant (5) sont un élément de retenue de poche à gaz et/ou un élément de retenue de générateur de gaz et/ou un capot de recouvrement de l'airbag.

18. Système de liaison doté d'un dispositif de retenue (1) selon l'une quelconque des revendications 1 à 17, qui comprend au moins un composant (5) relié au dispositif de retenue ou une partie d'un composant (5), notamment un module d'airbag ou une partie d'un module d'airbag, et doté d'un composant de véhicule automobile (6), notamment d'un longeron latéral (6) du dossier d'un siège de véhicule ou d'une entretoise d'une portière de véhicule,
le composant de véhicule (6) comprenant au moins un orifice de réception (7), et
le dispositif de retenue (1) pouvant être accroché avec le crochet (2) dans l'orifice de réception (7) et pouvant être relié au composant de véhicule automobile (6) par l'intermédiaire de l'élément (3) de la liaison de composant.

19. Système d'assemblage selon la revendication 18, **caractérisé en ce que** l'orifice de réception est un trou oblong (7).

20. Système d'assemblage selon la revendication 18 ou 19, **caractérisé en ce que** le crochet (2) du dispositif de retenue (1) fixé au composant de véhicule automobile (6) est orienté vers le bas.
